Europäisches Patentamt

European Patent Office

Office européen des brevets

(11) Numéro de publication: **0 157 674 B1**

(12) **FASCICULE DE BREVET EUROPEEN**

(45) Date de publication de fascicule du brevet: **19.05.93**

(51) Int. Cl.5: **B01J 35/10**, B01J 23/88, C10G 45/08

(21) Numéro de dépôt: **85400429.8**

(22) Date de dépôt: **06.03.85**

Le dossier contient des informations techniques présentées postérieurement au dépôt de la demande et ne figurant pas dans le présent fascicule.

(54) **Utilisation de catalyseurs d'hydrotraitement d'hydrocarbures.**

(30) Priorité: **06.03.84 FR 8403461**

(43) Date de publication de la demande:
**09.10.85 Bulletin 85/41**

(45) Mention de la délivrance du brevet:
**19.05.93 Bulletin 93/20**

(84) Etats contractants désignés:
**BE DE FR GB IT NL**

(56) Documents cités:
EP-A- 0 048 670   EP-A- 0 067 708
AU-B- 34 097     US-A- 3 887 455
US-A- 3 907 668   US-A- 4 267 033

(73) Titulaire: **TOTAL RAFFINAGE DISTRIBUTION S.A.**
**84, rue de Villiers**
**F- 92538 Levallois Perret Cédex(FR)**

(72) Inventeur: **Devanneaux, Jacques**
**5, rue de Dauphiné**
**F- 76290 Montivilliers(FR)**
Inventeur: **Gallez, Jean-Paul**
**Sente aux prêtres Parc d'Anxtot**
**F- 76291 Bolbec(FR)**
Inventeur: **Muller, Alain**
**19, rue du Vieux Château**
**F- 69340 Francheville le Bas(FR)**
Inventeur: **Triki, André**
**10, rue de Savoie**
**F- 76290 Montivilliers(FR)**

(74) Mandataire: **Jolly, Jean-Pierre et al**
**Cabinet Jolly 54, rue de Clichy**
**F- 75009 Paris (FR)**

# EP 0 157 674 B1

**Description**

La présente invention concerne l'utilisation de catalyseurs d'hydrotraitement d'hydrocarbures.

Les catalyseurs composés d'un support en oxyde minéral réfractaire sur lequel est déposé au moins un métal des groupes VIII et VIA de la version française du tableau périodique des éléments sont bien connus. Il servent notamment à l'hydrodésulfuration de charges d'hydrocarbures, provenant par exemple du fractionnement du pétrole brut, par distillation sous pression atmosphérique, puis sous pression réduite. Ce fractionnement conduit à l'obtention d'une gamme de produits allant des essences aux résidus de distillation sous pression réduite, appelés ci‑après résidus sous vide, en passant par les gazoles et les distillats. Ces produits doivent être désulfurés avant emploi comme carburant ou comme combustible.

De tels catalyseurs sont notamment constitués par un support tel que l'alumine, sur lequel sont déposés du cobalt et du molybdène. La durée de vie de ces catalyseurs est limitée par un empoisonne‑ment progressif de ceux‑ci, par accumulation de dépôts liés à la présence de sodium, de dérivés azotés basiques, de composés dioléfiniques pour les coupes distillables, ou encore de métaux, d'asphaltènes et, plus généralement, de composés précurseurs de coke, pour les coupes les plus lourdes, telles que les résidus de distillation sous pression atmosphérique ou sous vide, dont la valorisation devient de plus en plus importante, compte tenu des conditions économiques actuelles du marché du pétrole brut.

Il est donc particulièrement intéressant de disposer d'un catalyseur résistant à toute forme d'empoi‑sonnement, quelle qu'en soit l'origine et, par conséquent, de catalyseurs particulièrement adaptés à l'hydrotraitement de charges d'hydrocarbures lourds, et présentant également, vis‑vis de charges d'hy‑drocarbures plus légers contenant les composés précurseurs des dépôts précédemment cités, une résistance à l'empoisonnement supérieure à celle des catalyseurs conventionnels.

On connaît, par AU‑B‑34 097, un catalyseur d'hydrodémétallisation‑désulfuration comprenant un oxyde ou un sulfure d'un métal du groupe VI B et un oxyde ou un sulfure de groupe VIII de la Classification Périodique, avec un support poreux d'alumine dont au moins 50% du volume poreux est constitué de pores de 0 à $100.10^{-8}$ cm, au moins 90% de volume poreux est constitué de pores de 0 à $200.10^{-8}$ cm, le volume poreux total étant de 0,65 à 0,95 $cm^3/g$, avec un diamètre moyen de pore de 145 à $170.10^{-8}$ cm et une surface de 180 à 220 $m^2/g$. Dans une réalisation préférée, 25% du volume poreux est constitué de pores de 0 à $30.10^{-8}$ cm de diamètre et au moins 70% du volume poreux est constitué de pores de 0 à $150.10^{-8}$ cm de diamètre.

La Demanderesse a établi maintenant que des catalyseurs présentant une porosité particulière et une distribution caractéristique du spectre Raman étaient de très bons catalyseurs d'hydrotraitement d'hydro‑carbures, et notamment d'hydrodésulfuration et d'hydrodémétallisation.

L'invention a donc pour objet l'utilisation dans un procédé d'hydrotraitement d'hydrocarbures d'une masse catalytique constituée exclusivement de lots de grains de catalyseurs comprenant :

a‑ un support en oxyde minéral réfractaire,

b‑ sous forme libre ou combinée, de 0,5 à 30% en poids, rapporté au poids total du catalyseur, de molybdène,

c‑ sous forme libre ou combinée, de 0,5 à 10% en poids, rapporté au poids total du catalyseur, d'au moins un métal choisi dans le groupe constitué par le nickel et le cobalt,

lesdits lots de catalyseurs ayant tous un volume poreux supérieur à 0,70 $cm^3$ par gramme, le volume poreux constitué par les pores ayant un rayon supérieur à 300 Angströms ($10^{-10}$ m) étant égal au maximum à 30% du volume poreux total, et le volume poreux constitué par les pores ayant un rayon inférieur à 50 Angströms ($10^{-10}$ m) étant supérieur à 10% du volume poreux total et, de préférence, à 20% du volume poreux total, les raies de fréquences allant de 900 à 1020 $cm^{-1}$ du spectre obtenu en étudiant chacun de ces lots par microsonde Raman présentant la distribution suivante:

– 40% au plus ont une fréquence comprise entre 900 et 930 $cm^{-1}$,

– au moins 40% ont une fréquence comprise entre 930 et 955 $cm^{-1}$,

– 30% au plus ont une fréquence comprise entre 955 et 1020 $cm^{-1}$.

Dans cette définition de l'objet de l'invention et dans la suite de la présente description, il est entendu que les valeurs de volume poreux indiquées sont celles obtenues par mesure à l'aide du porosimètre à mercure (angle de contact 140°).

Les caractéristiques du spectre Raman du catalyseur décrivent en fait un pic fin dans la zone de fréquence comprise entre 900 et 1020 $cm^{-1}$ et qui correspond aux atomes de molybdène.

On peut se reporter, pour avoir une description de la technique de microsonde Raman, au brevet français n° 2 356 931.

La Demanderesse a constaté que les catalyseurs présentant les caractéristiques de volume poreux et de spectre Raman indiquées sont des catalyseurs de désulfuration actifs et stables, présentant en outre un

2

pouvoir démétallisant élevé.

L'invention concerne plus particulièrement l'utilisation des catalyseurs définis ci‑dessus et ayant en outre une surface spécifique comprise entre 150 et 350m$^2$ par gramme et un volume poreux compris entre 0,7 et 2cm$^3$ par gramme et, de préférence, compris respectivement entre 200 et 300 m$^2$ par gramme et 0,7 et 1,2 cm$^3$ par gramme.

Le mode de la distribution des rayons de pore des catalyseurs, c'est‑à‑dire le maximum de la courbe de distribution des rayons de pore, est de préférence constitué par des pores ayant un rayon compris entre 20 et 60 Angströms (10$^{-10}$ m).

Le support du catalyseur selon l'invention peut être notamment une alumine ou un aluminosilicate. Il peut s'agir d'une alumine pouvant contenir jusqu'à 70% en poids de silice.

Le support d'alumine peut être préparé en mélangeant par malaxage de l'eau et de la poudre d'alumine précipitée et séchée par atomisation. Le mélange est ensuite extrudé dans une extrudeuse à vis. Les extrudés obtenus sont séchés à 120˚ C, puis calcinés à une température comprise entre 500 et 750˚ C.

Les catalyseurs utilisés selon l'invention contiennent, de préférence, rapporté au poids total du catalyseur, de 5 à 25% en poids de molybdène et de 1 à 8% en poids d'au moins un métal choisi dans le groupe constitué par le nickel et le cobalt.

Ces catalyseurs peuvent être préparés par une imprégnation du support par au moins une solution contenant au moins un élément choisi dans le groupe constitué par le molybdène, le nickel et le cobalt, ladite imprégnation étant suivie d'une calcination à une température comprise entre 300 et 700˚ C et, de préférence, entre 450 et 600˚ C.

Les catalyseurs selon l'invention peuvent être utilisés notamment pour l'hydrotraitement de charges d'hydrocarbures provenant de la distillation du pétrole brut, en vue de désulfurer et de démétalliser ces charges.

L'opération d'hydrotraitement peut s'effectuer dans les conditions suivantes :
- température comprise entre 300 et 450˚ C,
- pression comprise entre 25 et 250 bar,
- rapport volumique

$$\frac{\text{hydrogène}}{\text{hydrocarbures}}$$

compris entre 50 et 3000 normaux‑litres/litre,
- vitesse volumique horaire de la charge, mesurée à l'état liquide, de préférence comprise entre 0,2 et 5 (la vitesse volumique horaire étant le volume de liquide passant par heure sur une unité de volume de catalyseur).

Préalablement aux opérations de désulfuration des charges d'hydrocarbures, il peut être avantageux de présulfurer les catalyseurs en présence d'hydrogène, par des procédés connus ; en général, on monte la température jusqu'à environ 350 à 400˚ C, en faisant passer sur le catalyseur des composés susceptibles de libérer du soufre, tels que des mélanges d'hydrogène et de sulfure d'hydrogène, des mercaptans ou du sulfure de carbone, ou même un gazole contenant du soufre.

Les exemples qui suivent sont destinés à illustrer l'invention. Ils n'ont pas de caractère limitatif.

L'exemple 1 concerne l'hydrodésulfuration d'un gazole à l'aide d'un catalyseur A selon l'invention et d'un catalyseur commercial T1.

L'exemple 2 concerne l'hydrotraitement de charges d'hydrocarbures lourds à l'aide du catalyseur A et d'un catalyseur commercial T2.

L'exemple 3 concerne l'hydrotraitement de charges d'hydrocarbures lourds à l'aide du catalyseur A et de catalyseurs commerciaux T3 et T4.

Les figures des dessins annexés seront explicitées au cours de la description de ces exemples.

## EXEMPLE 1

Cet exemple concerne l'hydrodésulfuration d'un gazole à l'aide d'un catalyseur A selon l'invention et d'un catalyseur commercial témoin T1.

Le catalyseur A selon l'invention a été préparé de la façon suivante :
On part d'une alumine commercialisée par la Société AMERICAN CYANAMID sous la référence 5960.
On imprègne cette alumine avec une solution aqueuse d'heptamolybdate d'ammonium et de nitrate de nickel, cette solution étant en concentration telle que le catalyseur final contienne 24,5 % en poids d'oxyde

de molybdène Mo $O_3$ et 4,8 % d'oxyde de cobalt Co O. On sèche le produit obtenu 16 heures à 120°C et on le calcine à l'air 2 heures à 550°C.

On obtient ainsi le catalyseur A selon l'invention, ayant la composition et les caractéristiques suivantes :

| | |
|---|---|
| – $Al_2O_3$ (% en poids) | 67,2 |
| – Mo $O_3$ (% en poids) | 24,5 |
| – Co O (% en poids) | 4,8 |
| – Si O (% en poids) | 3,5 |
| – surface spécifique en $m^2$/g (mesurée à l'azote) | 280 |
| – volume poreux, en $cm^3$/g (mesuré en mercure) | 0,76 |
| – volume poreux constitué par des pores de rayon > 300 Å ($10^{-10}$ m) | 23,7 % soit 0,18 $cm^3$/g |
| – volume poreux constitué par des pores de rayon < 50 Å ($10^{-10}$ m) | 47,4% soit 0,36 $cm^3$/g |
| – mode poreux en Å ($10^{-10}$ m) (r) | 40. |

Ce catalyseur a été étudié par microsonde Raman. On a vérifié qu'il présente bien le spectre revendiqué, sinon il aurait été rejeté.

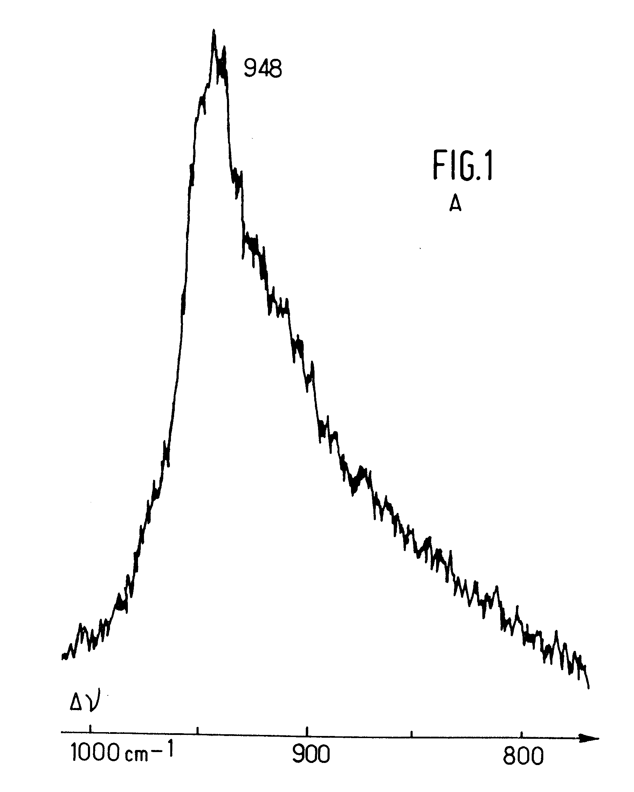

Le spectre de ce catalyseur, limité à la zone de fréquences $800-1020$ $cm^{-1}$, est représenté sur la figure 1 dans les dessins annexés.

De ce spectre, on peut calculer la répartition des fréquences des raies qui est donnée dans le Tableau 1 ci-après.

TABLEAU 1

| MICROSONDE RAMAN | | |
|---|---|---|
| % DES FREQUENCES | | |
| $900 - 930$ $cm^{-1}$ | $930 - 955$ $cm^{-1}$ | $955 - 1020$ $cm^{-1}$ |
| 35,5 | 41,3 | 23,2 |

La composition et les caractéristiques du catalyseur commercial témoin T1 sont les suivantes :

| | |
|---|---|
| – $Al_2O_3$ (% en poids) | 78,5 |
| – Mo $O_3$ (% en poids) | 16 |
| – Co O (% en poids) | 4,7 |
| – Si $O_2$ (% en poids) | 0,8 |
| – surface spécifique en $m^2$/g | 263 |
| – volume poreux, en $cm^3$/g (mesuré au mercure) | 0,46 |
| – volume poreux constitué par des pores de rayon > 300 Å ($10^{-10}$ m) (en $cm^3$/g) | 0,01 |
| – mode poreux en Å ($10^{-10}$ m) (r) | 25. |

Ce catalyseur a été étudié par microsonde Raman.

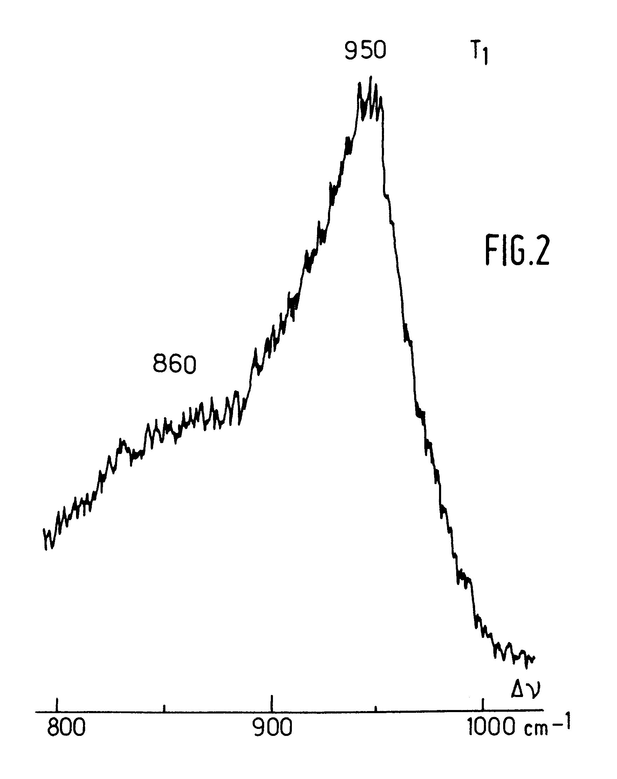

Le spectre de ce catalyseur, limité à la zone de fréquences $800-1020$ $cm^{-1}$, est représenté sur la figure 2.

De ce spectre, on peut calculer la répartition des fréquences des raies,qui est donnée dans le tableau 2 ci-après.

TABLEAU 2

| % DES FREQUENCES | | |
|---|---|---|
| $900 - 930$ $cm^{-1}$ | $930 - 955$ $cm^{-1}$ | $955 - 1020$ $cm^{-1}$ |
| 33 | 38,4 | 28,6 |

On peut constater que le pic correspondant au catalyseur selon l'invention (figure 1) a une forme beaucoup plus fine que celui du catalyseur T1 (figure 2).

On procède, à l'aide des catalyseurs A et T1, à l'hydrodésulfuration d'une charge d'hydrocarbures constituée par un gazole, dont les caractéristiques sont les suivantes :

| | |
|---|---|
| – masse volumique à 15°C (mesurée selon la norme Afnor T 60 – 101) | 859,5 kg/m³, |
| – viscosité à 20°C (mesurée selon la norme Afnor T 60 – 100) | 7 centistokes, |
| – teneur en soufre (mesurée par fluorescence X) | 1,44 % en poids, |
| – point initial et point final d'ébullition (mesurés selon la norme Afnor M 07 – 002) | 242,5°C – 397°C. |

Les essais sont effectués de la façon suivante :

On utilise une unité pilote, sans recycle de gaz, avec un réacteur isotherme, contenant un mélange homogène de 50 cm³ de catalyseur et de 50 cm³ d'alumine inerte broyée.

Avant le test proprement dit, on présulfure le catalyseur avec un gazole, dont l'intervalle de distillation est compris entre 225 et 385°C et contenant 1,3 % en poids de soufre.

Cette présulfuration est effectuée sous une pression d'hydrogène de 30 bar, à une vitesse spatiale horaire de 3 et un taux hydrogène/charge de 200 normaux – litres/litre. On augmente progressivement la température en 24 heures, de façon à atteindre la température de l'essai. On détermine la teneur en soufre de l'effluent.

On a effectué différents essais dans différentes conditions avec les catalyseurs A et T1.

Les conditions opératoires des essais et les résultats figurent dans le tableau 3 ci – après.

TABLEAU 3

| ESSAI N° | Conditions opératoires | | | Teneur en soufre de l'effluent | |
|---|---|---|---|---|---|
| | Température en °C | Pression en bar: | Vitesse Volumique horaire | Avec le catalyseur A | Avec le catalyseur T1 |
| 1 | 335 | 40 | 3 | 0,26 | 0,33 |
| 2 | 355 | 26 | 4 | 0,19 | 0,25 |
| 3 | 375 | 40 | 5 | 0,09 | 0,15 |

Le rapport

$$\frac{\text{hydrogène}}{\text{hydrocarbures}}.$$

est égal à 107 normaux iitres/litre pour tous les essais.

Ce tableau montre bien la supériorité du catalyseur selon l'invention par rapport au catalyseur – témoin.

## EXEMPLE 2

Cet exemple concerne l'hydrodésulfuration d'une charge constituée par un mélange contenant 70 % en poids d'un gazole et 30 % en poids du produit issu d'un craquage catalytique connu sous le nom de diluant catalytique, à l'aide du catalyseur A et d'un catalyseur commercial témoin T2.

Cette charge a été choisie comme exemple de charge difficile à désulfurer et posant des problèmes de désactivation rapide des catalyseurs.

Le catalyseur commercial témoin T2 est un catalyseur dont la composition et les caractéristiques sont les suivantes :

| | |
|---|---|
| − Al$_2$O$_3$ (% en poids) | 79,9 |
| − Mo O$_3$ (% en poids) | 15,0 |
| − Co O (% en poids) | 4,1 |
| − Si O$_2$ (% en poids) | 1,0 |
| − surface spécifique en m$^2$/g (mesurée à l'azote) | 259 |
| − volume poreux, en cm$^3$/g (mesuré au mercure) | 0,47 |
| − volume poreux constitué par des pores de rayon > 300 Å (10$^{-10}$m), en cm$^3$/g | 0,02 |
| − mode poreux en Å (10$^{-10}$m) (r) | 30. |

Ce catalyseur a été étudié par microsonde Raman.

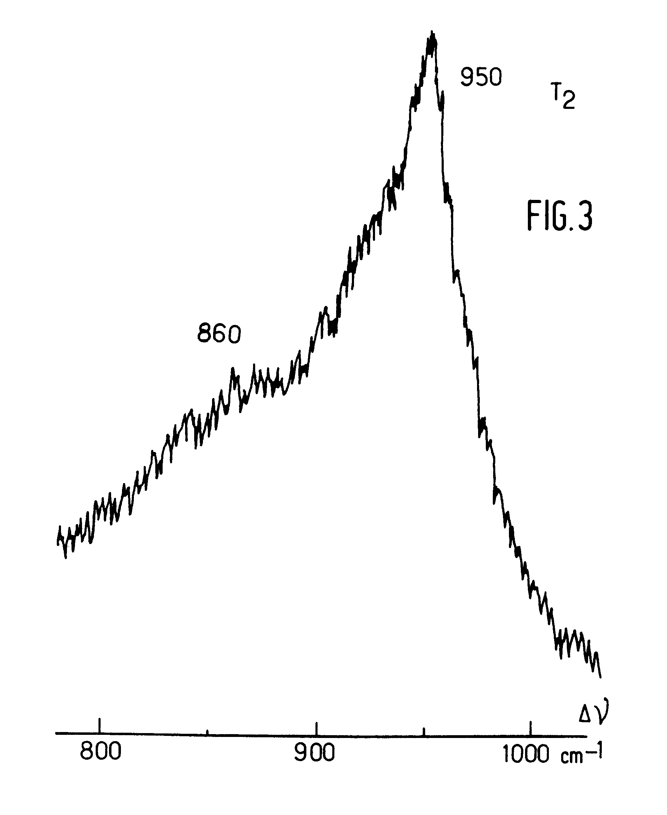

Le spectre de ce catalyseur, limité à la zone de fréquences 800 − 1020 cm$^{-1}$, est représenté sur la figure 3.

De ce spectre, on peut calculer la répartition des fréquences des raies, qui est donnée dans le tableau 4 ci − après.

TABLEAU 4

| MICROSONDE RAMAN | | |
|---|---|---|
| % DES FREQUENCES | | |
| 900 − 930 cm$^{-1}$ | 930 − 955 cm$^{-1}$ | 955 − 1020 cm$^{-1}$ |
| 29,5 | 36,6 | 33,9 |

Le mélange de gazole et de diluant catalytique a les caractéristiques suivantes :

| | |
|---|---|
| − masse volumique à 15˚C (mesurée selon la norme Afnor T 60 − 101) | 870 kg/m$^3$, |
| − teneur en soufre (mesurée par fluorecence X) | 1,59 % en poids, |
| − point initial et point final d'ébullition (mesurés selon la norme Afnor M 07 − 002) | 226˚C − 386˚C, |
| − indice de brome (mesuré selon la norme Afnor M 07 − 017) | 5,0 (en g/100g). |

La valeur élevée de cet indice de brome, indicatif de la quantité de composés oléfiniques contenus dans cette charge, montre la difficulté de désulfurer cette charge, en raison de la possibilité de polyméri − sation de ces composés et donc de formation de gommes.

Les essais sont effectués de la façon suivante

On utilise une unité pilote à recycle de gaz avec un réacteur isotherme contenant 200 cm$^3$ de catalyseur.

Avant le test proprement ait, on présulfure le catalyseur avec un gazole, dont l'intervalle de distillation est compris entre 225 et 385˚C et contenant 1,3 % en poids de soufre.

Cette présulfuration est effectuée sous une pression d'hydrogène de 30 bar, à une vitesse spatiale horaire de 3 et un taux hydrogène/charge de 200 normaux − litres/litre. On augmente progressivement la température en 24 heures, de façon à atteindre la température de 360˚C.

Les conditions opératoires des tests proprement dits sont les suivantes :

| | |
|---|---|
| − pression d'hydrogène | 15 bar |
| − pression d'hydrogène sulfuré | 1 bar |
| − vitesse spatiale horaire | 1,8 |
| − rapport hydrogène/hydrocarbures | 85 normaux − litres/litre. |

Au début de l'essai, la température du catalyseur est fixée à 360˚C, ce qui correspond à un taux de désulfuration (réduction de la teneur en soufre de la charge) d'environ 30 %. Par la suite, ce taux est maintenu constant, en compensant, si nécessaire, la baisse d'activité du catalyseur par une augmentation de la température.

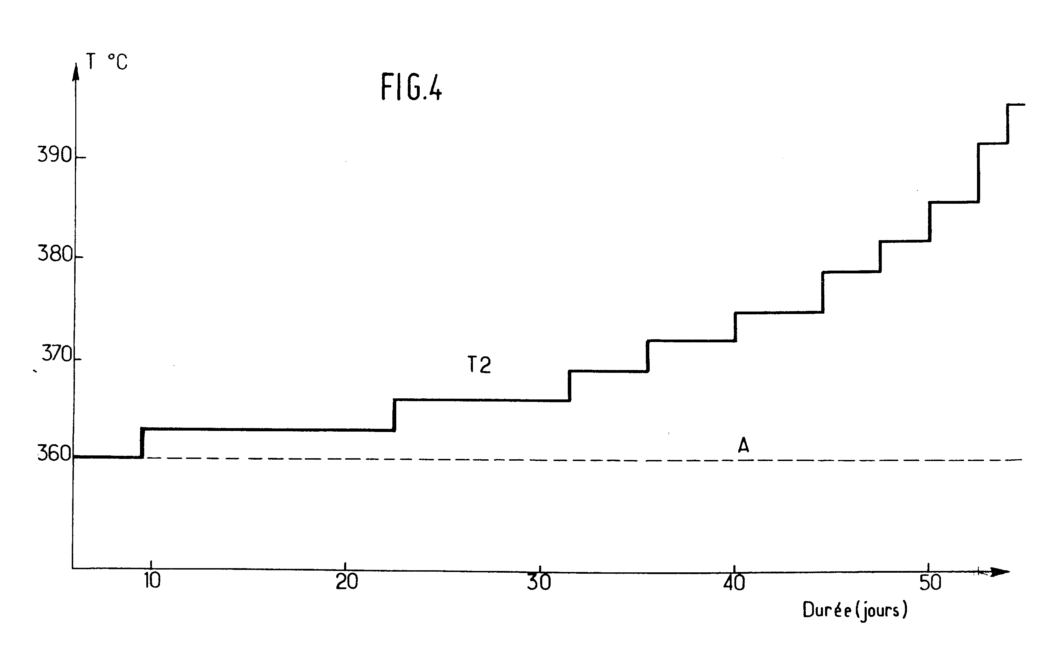

Avec le catalyseur A, il est inutile d'élever la température, tandis qu'avec le catalyseur témoin T2, il faut l'élever, comme le montre la figure 4, ce qui traduit une mauvaise résistance au vieillissement de ce

6

catalyseur, ce qui n'est pas le cas du catalyseur A.

EXEMPLE 3

Cet exemple concerne l'hydrotraitement d'une charge constituée par le résidu de la distillation sous pression réduite d'un pétrole brut. Cet hydrotraitement à été effectué à l'aide du catalyseur A et de deux catalyseurs commerciaux témoins T3 et T4.

La composition et les caractéristiques des catalyseurs T3 et T4 sont données dans le tableau 5 ci-après.

TABLEAU 5

|  | CATALYSEUR | |
|---|---|---|
|  | T3 | T4 |
| $Al_2O_3$ (% en poids) | 83,2 | 81,2 |
| $MoO_3$ (% en poids) | 11,8 | 15,4 |
| $CoO$ (% en poids) | 3,6 | 3,4 |
| $SiO_2$ (% en poids) | 0,8 | 0 |
| Surface spécifique en $m^2/g$ (mesurée à l'azote) | 256 | 220 |
| Volume poreux en $cm^3/g$ (mesuré au mercure) | 0,51 | 0,51 |
| Volume poreux constitué par des pores de rayon > 300 Å ($10^{-10}$ m) en $cm^3$g Mode poreux en A ($10^{-10}$ m) (r) | 0,01 30 | 0,02 40 |

Ces catalyseurs ont été étudiés par microsonde Raman.

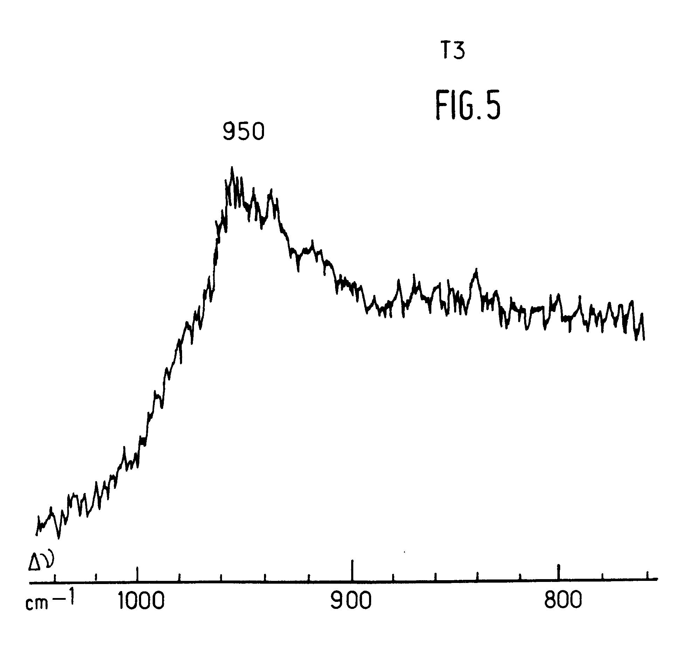

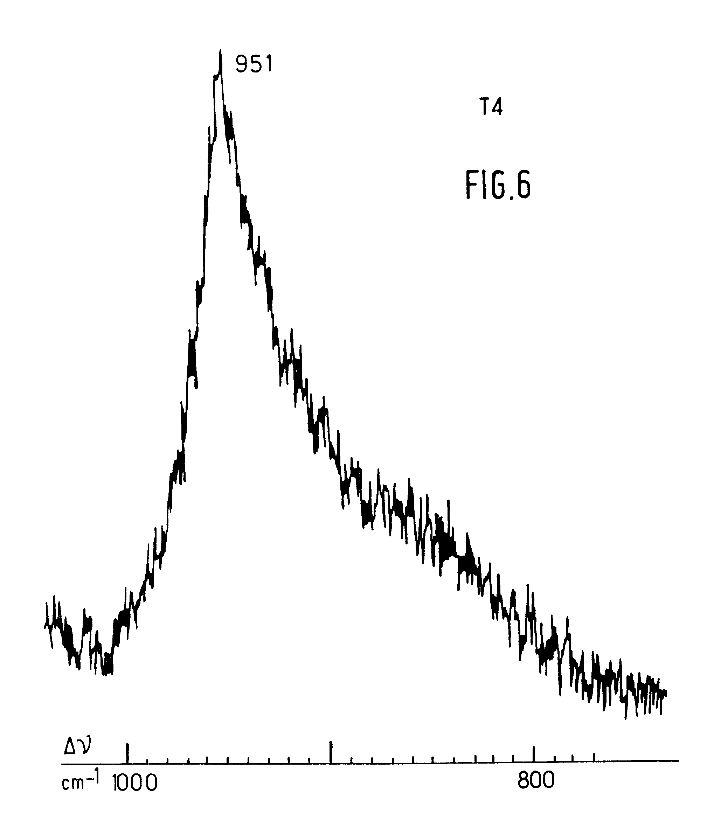

Les spectres de ces catalyseurs, limités à la zone de fréquences $800-1020$ $cm^{-1}$, sont représentés sur les figures 5 et 6.

De ces spectres, on peut calculer la répartition des fréquences des raies, qui est donnée dans le tableau 6 ci-après

TABLEAU 6

| CATALYSEUR | MICROSONDE RAMAN | | |
|---|---|---|---|
|  | % DES FREQUENCES | | |
|  | $900-930$ $cm^{-1}$ | $930-955$ $cm^{-1}$ | $955-1020$ $cm^{-1}$ |
| T3 | 25,3 | 35,7 | 39 |
| T4 | 30,1 | 38,9 | 32 |

Le résidu de la distillation sous vide a les caractéristiques suivantes :

| – masse volumique à 15°C (mesurée selon la norme Afnor T 60-101 | 1023 $kg/m^3$, |
|---|---|
| – viscosité à 100°C (mesurée selon la norme Afnor T 60-100) | 890 centistokes, |
| – point d'écoulement (mesuré selon la norme Afnor T 60-105) | 39°C |
| – teneur en soufre (mesurée par fluorescence X) | 5,3 % en poids, |
| – teneur en nickel (mesurée par fluorescence X) | 50 ppm |
| – teneur en vanadium (mesurée par fluorescence X) | 120 ppm |
| – teneur en asphaltènes (mesurée selon la norme Afnor T 60-115) | 6,5 % en poids, |
| – teneur en carbone Conradson (mesurée selon la norme Afnor T 60-115) | 19,5 % en poids. |

Les essais sont effectués de la façon suivante.

7

On utilise une unité pilote à recycle de gaz, avec un réacteur isotherme contenant 150 cm$^3$ de catalyseur.

Avant le test proprement dit, on présulfure le catalyseur avec un gazole, dont l'intervalle de distillation est compris entre 225 et 385°C et qui contient 1,3 % en poids de soufre.

Cette présulfuration est effecutée sous une pression d'hydrogène de 30 bar, à une vitesse spatiale horaire de 3 et un taux hydrogène/charge de 200 normaux−litres/litre. On augmente progressivement la température en 24 heures, de façon à atteindre la température de 370°C.

Les conditions opératoires des tests proprement dits sont les suivantes :

| | |
|---|---|
| − pression d'hydrogène | 145 bar, |
| − pression totale | 150 bar, |
| − pression d'hydrogène sulfuré | 5 bar, |
| − vitesse spatiale horaire | 0,5 |
| − rapport hydrogène/hydrocarbures | 1000 normaux−litres/litre. |

Au début de l'essai, la température du catalyseur est fixée de manière à obtenir un taux de désulfuration sensiblement égal à 70 %. Par la suite, ce taux est maintenu en compensant la baisse d'activité du catalyseur par une augmentation progressive de la température. Pour cet exemple, les essais ont été arrêtés lorsque la température a atteint 410°C.

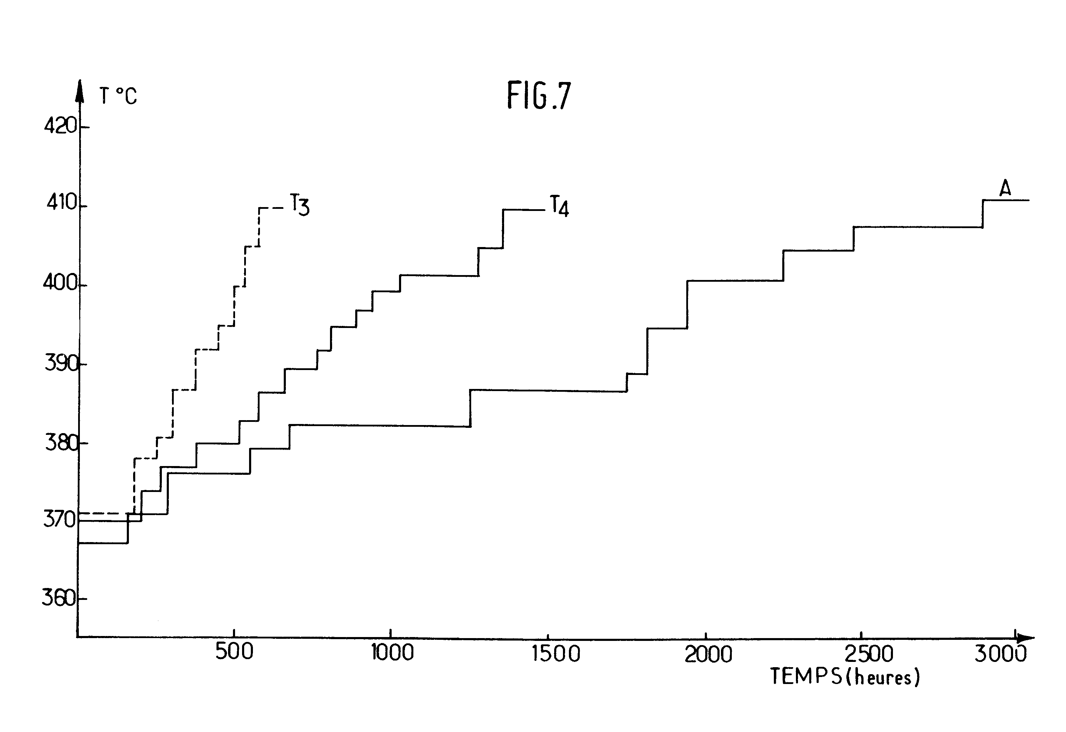

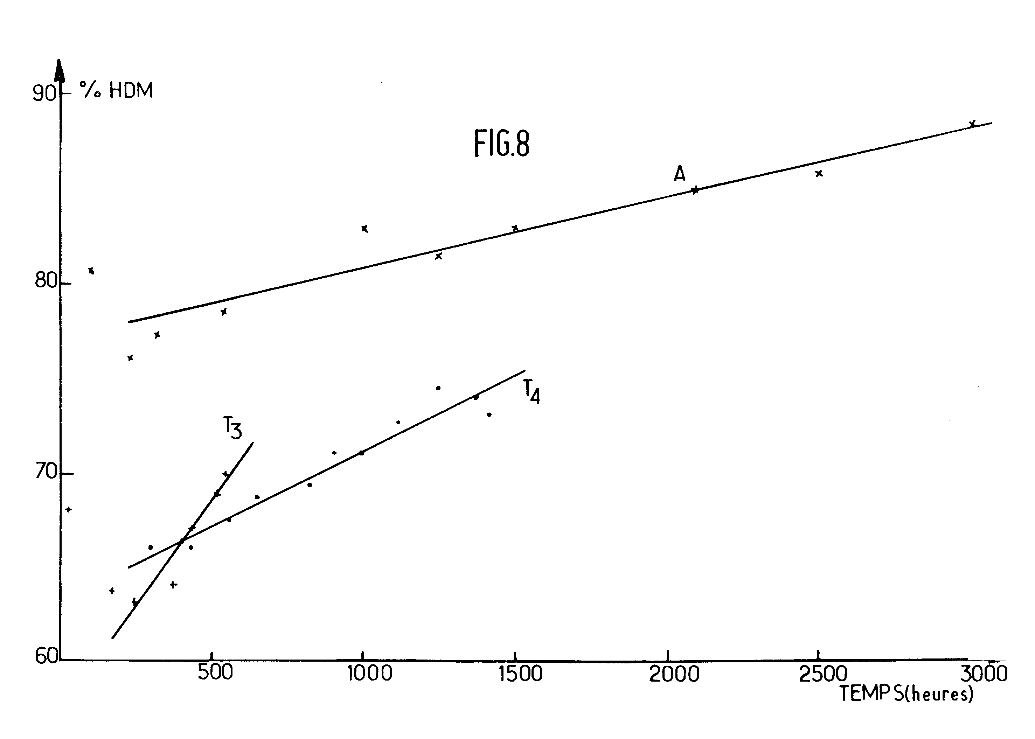

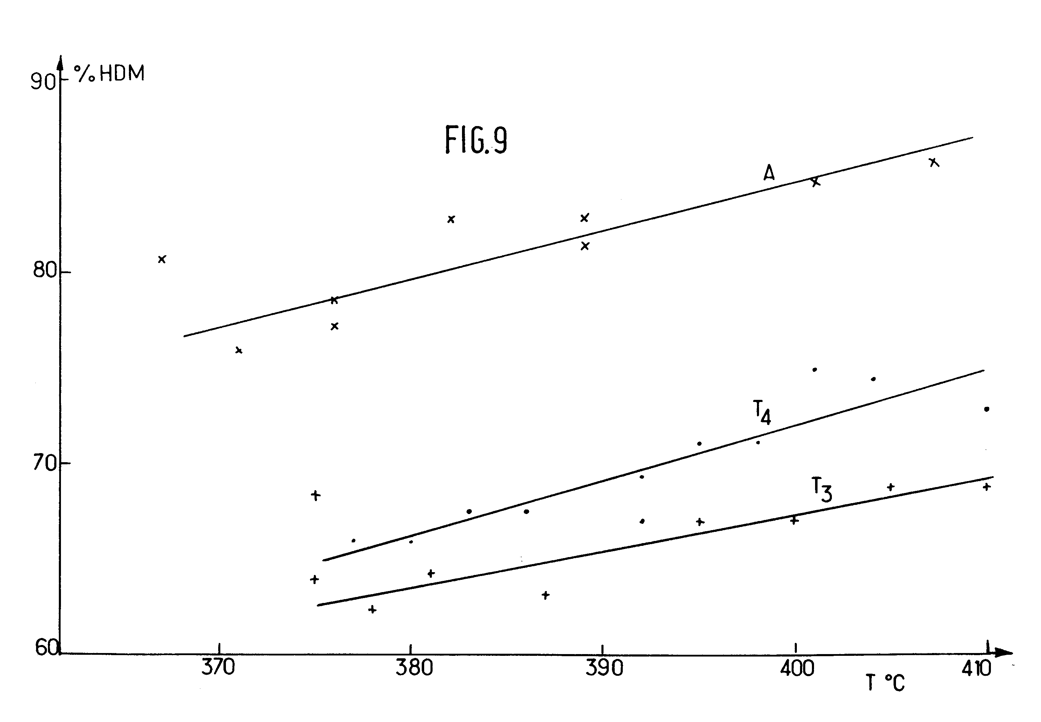

La figure 7, où sont représentées les courbes de températures en fonction du temps, montre que le catalyseur A suivant l'invention présente une résistance au vieillissement bien supérieure à celle des catalyseurs témoins $T_3$ et $T_4$, tout en ayant un pouvoir démétallisant (réduction de la teneur en métaux de la charge, indiquée sur les figures par l'abréviation % HDM) en fonction du temps (figure 8) et de la température (figure 9) plus élevé.

**Revendications**

**1.** Utilisation dans un procédé d'hydrotraitement d'hydrocarbures d'une masse catalytique constituée exclusivement de lots de grains de catalyseurs comprenant :

a − un support en oxyde minéral réfractaire,

b − sous forme libre ou combinée, de 0,5 à 30% en poids, rapporté au poids total du catalyseur, de molybdène,

c − sous forme libre ou combinée, de 0,5 à 10% en poids, rapporté au poids total du catalyseur, d'au moins un métal choisi dans le groupe constitué par le nickel et le cobalt,

lesdits lots de catalyseurs ayant tous un volume poreux supérieur A 0,70 cm$^3$ par gramme, le volume poreux constitué par les pores ayant un rayon supérieur à 300 Angströms ($10^{-10}$m) étant égal au maximum à 30% du volume poreux total, et le volume poreux constitué par les pores ayant un rayon inférieur à 50 Angströms ($10^{-10}$m) étant supérieur à 10% du volume poreux total et, de préférence, à 20% du volume poreux total, les raies de fréquences allant de 900 à 1020 cm$^{-1}$ du spectre obtenu en étudiant chacun de ces lots par microsonde Raman présentant la distribution suivante:

− 40% au plus ont une fréquence comprise entre 900 et 930 cm$^{-1}$,

− au moins 40% ont une fréquence comprise entre 930 et 955 cm$^{-1}$,

− 30% au plus ont une fréquence comprise entre 955 et 1020 cm$^{-1}$.

**2.** Utilisation selon la revendication 1, caractérisée en ce que les grains de catalyseur ont une surface spécifique comprise entre 150 et 350 m$^2$ par gramme, un volume poreux compris entre 0,7 et 2 cm$^3$ par gramme et, de préférence, compris respectivement entre 200 et 300 m$^2$ par gramme et 0,7 et 1,2 cm$^3$ par gramme.

**3.** Utilisation selon la revendication 1, caractérisée en ce que le mode poreux $\underline{r}$ des lots de grains de catalyseur est compris entre 20 et 60 Å ($10^{-10}$m).

**4.** Utilisation selon l'une des revendications 1 à 3, caractérisée en ce que le support des grains de catalyseur est une alumine pouvant contenir jusqu'à 70% en poids de silice.

**5.** Utilisation selon l'une des revendications 1 à 4, caractérisée en ce que le métal choisi dans le groupe constitué par le nickel et le cobalt est le cobalt.

**6.** Utilisation selon l'une des revendications 1 à 5, dans laquelle le procédé d'hydrotraitement est un procédé de désulfuration, en présence d'hydrogène, d'une charge d'hydrocarbures.

**7.** Utilisation selon l'une des revendications 1 à 5, dans laquelle le procédé d'hydrotraitement est un procédé de démétallisation, en présence d'hydrogène, d'une charge d'hydrocarbures.

**Claims**

**1.** Use in a process for the hydrotreatment of hydrocarbons of a catalytic material constituted exclusively of portions of catalyst particles comprising:

a) a support comprising refractory mineral oxide,

b) in free or combined form, from 0.5 to 30% by weight, in relation to the total weight of the catalyst, of molybdenum,

c) in free or combined form, from 0.5 to 10% by weight, in relation to the total weight of the catalyst, of at least one metal chosen from the group comprising nickel and cobalt,

said portions of catalysts all having a pore volume greater than 0.70 $cm^3$ per gramme, the pore volume constituted by pores having a radius greater than 300 Ångströms ($10^{-10}$ m) being equal at most to 30% of the total pore volume, and the pore volume constituted by pores having a radius of less than 50 Ångströms ($10^{-10}$ m) being greater than 10% of the total pore volume and, preferably, than 20% of the total pore volume, the frequency lines going from 900 to 1020 $cm^{-1}$ of the spectrum obtained by examining each of these portions by Raman microprobe having the following distribution:

– at most 40% have a frequency of between 900 and 930 $cm^{-1}$,

– at most 40% have a frequency of between 930 and 955 $cm^{-1}$,

– at most 30% have a frequency of between 955 and 1020 $cm^{-1}$.

**2.** Use according to claim 1, characterised in that the catalyst particles have a specific surface of between 150 and 350 $cm^2$ per gramme, a pore volume of between 0.7 and 2 $cm^3$ per gramme and, preferably, of respectively between 200 and 300 $m^2$ per grame and 0.7 and 1.2 $cm^3$ per gramme.

**3.** Use according to claim 1, characterised in that the pore mode $\underline{r}$ of the portions of catalyst particles is between 20 and 60 Å ($10^{-10}$ m).

**4.** Use according to any one of claims 1 to 3, characterised in that the support for the catalyst particles is an alumina which can contain up to 70% by weight of silica.

**5.** Use according to any one of claims 1 to 4, characterised in that the metal chosen from the group comprising nickel and cobalt is cobalt.

**6.** Use according to any one of claims 1 to 5, in which the hydrotreatment process is a process for the desulphurisation of a hydrocarbon charge, in the presence of hydrogen.

**7.** Use according to any one of claims 1 to 5, in which the hydrotreatment process is a process for the demetallisation of a hydrocarbon charge, in the presence of hydrogen.

**Patentansprüche**

**1.** Verwendung einer katalytischen Masse bei einem Verfahren zur Hydrobehandlung von Kohlenwasserstoffen, welche ausschließlich aus Katalysatorkörnerpartien besteht, die

a) einen Träger aus einem feuerfesten mineralischen Oxid,

b) 0,5 bis 30 Gew.–%, bezogen auf das Katalysatorgesamtgewicht, freies oder gebundenes Molybdän und

c) 0,5 bis 10 Gew.–%, bezogen auf das Katalysatorgesamtgewicht, freies oder gebundenes Nickel und/oder Kobalt

aufweisen und alle ein Porenvolumen größer als 0,70 $cm^3/g$ haben, wobei höchstens 30 % des gesamten Porenvolumens von Poren mit einem Radius größer als 300 Angström ($10^{-10}$ m) und über 10

% des gesamten Porenvolumens, vorzugsweise über 20 % des gesamten Porenvolumens, von Poren mit einem Radius kleiner als 50 Angström ($10^{-10}$ m) gebildet sind, und jeweils bei Untersuchung mit einer Raman – Mikrosonde ein Spektrum ergeben, dessen Linien im Frequenzbereich von 900 bis 1020 $cm^{-1}$ folgendermaßen verteilt sind:

höchstens 40 % haben eine Frequenz zwischen 900 und 930 $cm^{-1}$,

mindestens 40 % haben eine Frequenz zwischen 930 und 955 $cm^{-1}$,

höchstens 30 % haben eine Frequenz zwischen 955 und 1020 $cm^{-1}$.

**2.** Verwendung nach Anspruch 1, dadurch **gekennzeichnet,** daß die Katalysatorkörner eine spezifische Oberfläche zwischen 150 und 350 $m^2$/g, vorzugsweise zwischen 200 und 300 $m^2$/g, und ein Porenvo – lumen zwischen 0,7 und 2 $cm^3$/g, vorzugsweise zwischen 0,7 und 1,2 $cm^3$/g, aufweisen.

**3.** Verwendung nach Anspruch 1, dadurch **gekennzeichnet**, daß die Katalysatorkörnerpartien eine Po – renradiusverteilung aufweisen, deren Kurve ihr Maximum zwischen 20 und 60 Angström ($10^{-10}$ m) hat.

**4.** Verwendung nach einem der Ansprüche 1 bis 3, dadurch **gekennzeichnet**, daß es sich bei dem Träger der Katalysatorkörner um eine Tonerde handelt, welche bis zu 70 Gew. – % Kieselerde enthalten kann.

**5.** Verwendung nach einem der Ansprüche 1 bis 4, dadurch **gekennzeichnet**, daß es sich bei dem aus der aus Nickel und Kobalt bestehenden Gruppe ausgewählten Metall um Kobalt handelt.

**6.** Verwendung nach einem der Ansprüche 1 bis 5, wobei es sich bei dem Verfahren zur Hydrobehand – lung um ein Verfahren zur Entschwefelung einer Charge von Kohlenwasserstoffen in Gegenwart von Wasserstoff handelt.

**7.** Verwendung nach einem der Ansprüche 1 bis 5, wobei es sich bei dem Verfahren zur Hydrobehand – lung um ein Verfahren zur Entmetallisierung einer Charge von Kohlenwasserstoffen in Gegenwart von Wasserstoff handelt.

948

FIG.1
A

$\Delta \nu$

1000 cm⁻¹ ··· 900 ··· 800

FIG.2

FIG.3

FIG.4

T3

FIG.5

951

T4

FIG.6

$\Delta\nu$

cm$^{-1}$ 1000                                    800

FIG.7

EP 0 157 674 B1

FIG.8

FIG.9

EP 0 157 674 B1